(19) Europäisches Patentamt
European Patent Office
Office européen des brevets

(11) **EP 4 223 833 A1**

(12) **EUROPEAN PATENT APPLICATION**
published in accordance with Art. 153(4) EPC

(43) Date of publication:
**09.08.2023 Bulletin 2023/32**

(21) Application number: **21875424.0**

(22) Date of filing: **24.09.2021**

(51) International Patent Classification (IPC):
*C08J 9/28* (2006.01)     *B01D 63/02* (2006.01)
*B01D 69/00* (2006.01)     *B01D 69/02* (2006.01)
*B01D 69/08* (2006.01)     *B01D 69/10* (2006.01)
*B01D 69/12* (2006.01)     *B01D 71/56* (2006.01)
*C08G 69/02* (2006.01)     *D01F 6/60* (2006.01)

(52) Cooperative Patent Classification (CPC):
**B01D 63/02; B01D 69/00; B01D 69/02;
B01D 69/08; B01D 69/10; B01D 69/12;
B01D 71/56; C08G 69/02; C08J 9/28; D01F 6/60**

(86) International application number:
**PCT/JP2021/035113**

(87) International publication number:
**WO 2022/071122 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2020 JP 2020165096**

(71) Applicants:
• **Unitika Ltd.**
  **Osaka-shi, Osaka 541-8566 (JP)**
• **National University Corporation Kobe University**
  **Kobe-shi, Hyogo 657-8501 (JP)**

(72) Inventors:
• **NAKAMURA, Ryota**
  **Uji-shi, Kyoto 611-0021 (JP)**
• **INOUE, Kuniko**
  **Uji-shi, Kyoto 611-0021 (JP)**
• **UMAKOSHI, Kyohei**
  **Uji-shi, Kyoto 611-0021 (JP)**
• **ONO, Takahiro**
  **Uji-shi, Kyoto 611-0021 (JP)**
• **MATSUYAMA, Hideto**
  **Kobe-shi, Hyogo 657-8501 (JP)**

(74) Representative: **Müller-Boré & Partner
Patentanwälte PartG mbB
Friedenheimer Brücke 21
80639 München (DE)**

(54) **POLYAMIDE POROUS MEMBRANE AND METHOD FOR PRODUCING SAME**

(57)     An object of the present invention is to provide a polyamide porous membrane having improved fluid permeation performance. A polyamide porous membrane having a dense layer formed on at least one surface, wherein the polyamide porous membrane has a streak-like recessed portion extending in one direction of a surface of the dense layer, and the streak-like recessed portion has an orientation angle of 0 to 5.0° or 175.0 to 180.0° and an orientation intensity of 1.5 to 2.0 according to predetermined orientation analysis.

FIG. 1

EP 4 223 833 A1

## Description

Technical Field

The present invention relates to a polyamide porous membrane having excellent fluid permeation performance, and to a method for producing the polyamide porous membrane.

Background Art

Porous membranes are used as filtration membranes in various fields. For example, nanofiltration membranes and ultrafiltration membranes have been put into practical use in various fields, for example, in the field of water purification for removal of bacteria, viruses, pesticides, odorous components, and hardness components; in the medical field for artificial dialysis, and removal of viruses and proteins during the production of pharmaceuticals and water for medical use; and, in industrial fields for separation or concentration of heat-sensitive substances such as proteins and enzymes, production of ultrapure water, recovery of electrodeposition paints, treatment of sewage from silk and pulp mills, treatment of oily wastewater, treatment of buildings wastewater, clarification of fruit juice, production of unpasteurized *sake,* concentration and desalination of cheese whey, production of concentrated milk, concentration of egg whites, use in bioreactors, and water treatment at nuclear power plants.

There are various definitions of classification between nanofiltration, ultrafiltration, and the like, and the metes and bounds thereof are not fully clear; however, the IUPAC recommends that ultrafiltration is defined as using a porous material with a pore size in the range of 2 to 100 nm, and nanofiltration is defined as using a porous material with a pore size in the range of 2 nm or less. Since nanofiltration is intended for selection of substances with a size larger than in reverse osmosis, it may also be defined as using a porous material with a pore size in the range of 1 to 2 nm. On the other hand, pore sizes of nanofiltration and ultrafiltration membranes are difficult to observe and measure even with an electron microscope, and additionally, these pore sizes vary. Therefore, a representative pore size of a membrane is not considered as sufficient to indicate the separation performance of the membrane, and the molecular weight cut-off is typically used as an index of the separation performance. The size of a target substance that can be separated by an ultrafiltration membrane is not clearly defined around the molecular weight cut-off, and has a certain range. Specifically, in general, ultrafiltration is classified as having a molecular weight cut-off of 1,000 to 1,000,000, and nanofiltration is classified as having a molecular weight cut-off of 200 to 1,000. As described below, the term "ultrafiltration" or "ultrafiltration membrane" herein refers to filtration in which the molecular weight cut-off is set in the range of 1,000 to 1,000,000 or a filtration membrane with a molecular weight cut-off in the range of 1,000 to 1,000,000, and the term "nanofiltration" or "nanofiltration membrane" herein refers to filtration in which the molecular weight cut-off is set in the range of 200 to 1,000 or a filtration membrane with a molecular weight cut-off in the range of 200 to 1,000.

As described above, since porous membranes are used as filtration membranes in various fields of industries, they may be used for the treatment of a solution containing an organic solvent. However, polymer materials such as cellulose acetates, polyacrylonitriles, polyvinylidene fluorides, polysulfones, and polyethersulfones, which are often used as materials of conventional ultrafiltration membranes, are still unsatisfactory from the viewpoint of resistance to organic solvents. For example, among these materials, even polyacrylonitriles and polyvinylidene fluorides having relatively high organic solvent resistance have the drawback of easily dissolving in an organic solvent such as an aprotic polar solvent.

Under such circumstances, separation membranes formed using materials with high organic solvent resistance have been reported. Of these, polyamide resins have high organic solvent resistance, and are relatively inexpensive and readily available, and thus, methods for producing porous membranes using polyamide resins have been proposed. Regarding polyamide filtration membranes, for example, it has been reported that an asymmetric polyamide hollow fiber composed of a thin separation membrane and a thick support membrane is obtained by extruding a spinning solution containing 15 to 25% by weight of polyamide and 5 to 20% by weight of polyethylene glycol, together with formic acid and a coagulating core liquid, into a precipitation solution with a difference between the pH values of the coagulating core and the precipitation solution of 3 or more, and then by stretching the hollow fiber in a wet state, followed by drying (see, for example, Patent Document 1).

Prior Art Documents

Patent Documents

Patent Document 1: Japanese Patent Laid-Open Publication No. SHO58-65009

Summary of Invention

Technical Problem

Since the fluid permeation performance of a porous membrane decreases with decreasing molecular weight cut-off, the fluid permeation performance required in the porous membrane varies according to the molecular weight cut-off. However, conventional polyamide porous membranes often do not have fluid permeation performance appropriate for their molecular weight cut-off, and thus, there has been a need to improve the fluid permeation performance. In particular, in prior art, there is a noticeable tendency for porous membranes with a molecular weight cut-off of about 200 to 50,000 to have decreased fluid permeation performance, and it has been difficult to improve the fluid permeation performance in porous membranes having a molecular weight cut-off in this range.

It is therefore an object of the present invention to provide a polyamide porous membrane having improved fluid permeation performance and a method for producing the polyamide porous membrane.

Solution to Problem

As a result of extensive research to solve the above-described problem, the present inventors have found that a polyamide porous membrane containing a dense layer formed on at least one surface, the dense layer having a streak-like recessed portion extending in one direction, the streak-like recessed portion satisfying an orientation angle of 0 to 5.0° or 175.0 to 180.0° and an orientation intensity of 1.5 to 2.0 according to orientation analysis under predetermined conditions, has improved fluid permeation performance even if it has a molecular weight cut-off of about 200 to 50,000. The inventors have also found that the polyamide porous membrane can be obtained by forming a polyamide porous membrane from a dope solution containing a polyamide resin by using thermally induced phase separation (TIPS) and non-solvent induced phase separation (NIPS) in combination, extracting and removing a coagulation liquid undergoing phase separation in the polyamide porous membrane, and then uniaxially stretching the polyamide porous membrane simultaneously with or after drying. The present invention has been completed by conducting further research based on these findings.

In summary, the present invention provides embodiments of the invention as set forth below:
Item 1. A polyamide porous membrane comprising a dense layer formed on at least one surface,

wherein the polyamide porous membrane has a streak-like recessed portion extending in one direction of a surface of the dense layer, and
the streak-like recessed portion has an orientation angle of 0 to 5.0° or 175.0 to 180.0° and an orientation intensity of 1.5 to 2.0 according to the following orientation analysis:

[Orientation Analysis]

An electron microscope image of the surface of the dense layer is placed such that an X-axis direction is parallel to a longitudinal direction of the streak-like recessed portion observed in the dense layer, and the electron microscope image is binarized to obtain a binarized image. From a power spectrum image obtained by Fourier transformation of the binarized image, an approximate ellipse of an angular distribution map of mean amplitudes is determined. Based on the approximate ellipse, an orientation angle and an orientation intensity are determined as follows:

orientation angle: angle (°) of a minor-axis direction of the approximate ellipse with respect to a positive direction of the X-axis
orientation intensity: ratio of major-axis length/minor-axis length in the approximate ellipse.

Item 2. The polyamide porous membrane according to item 1, which has a molecular weight cut-off of 200 to 50,000.

Item 3. The polyamide porous membrane according to item 1 or 2, wherein a polyamide resin constituting the polyamide porous membrane is an aliphatic polyamide resin having methylene and amide groups at a molar ratio of $-CH_2-$ : $-NHCO-$ = 4:1 to 10:1.

Item 4. The polyamide porous membrane according to any one of item 1 to 3, which is a hollow fiber membrane.

Item 5. A filtration method comprising subjecting a fluid to be treated containing a solute or particles to filtration treatment, using the polyamide porous membrane according to any one of items 1 to 4.

Item 6. A filtration membrane module comprising the polyamide porous membrane according to any one of items 1 to 4, the polyamide porous membrane being housed in a module casing.

Item 7. A method for producing a polyamide porous membrane comprising the following first to fourth steps:

EP 4 223 833 A1

the first step of preparing a dope solution by dissolving a polyamide resin in an organic solvent at a temperature of 100°C or more, the organic solvent having a boiling point of 150°C or more and incompatible with the polyamide resin at a temperature of less than 100°C;

the second step of extruding the dope solution prepared in the first step in a predetermined shape into a coagulation bath at 100°C or less to solidify the polyamide resin into a membrane, wherein at least one surface of the dope solution extruded in the predetermined shape is contacted with a coagulation liquid having compatibility with the organic solvent used in the dope solution and having low affinity for the polyamide resin to form a polyamide porous membrane;

the third step of extracting and removing the coagulation liquid undergoing phase separation in the polyamide porous membrane formed in the second step; and

the fourth step of uniaxially stretching the polyamide porous membrane after the third step simultaneously with or after drying.

Item 8. The method for producing a polyamide porous membrane according to item 7, wherein in the fourth step, the polyamide porous membrane is uniaxially stretched at a stretching ratio of 1.2 to 5 times.

Item 9. The method for producing a polyamide porous membrane according to item 7 or 8, wherein in the first step, the organic solvent used for preparing the dope solution is an aprotic polar solvent.

Item 10. The method for producing a polyamide porous membrane according to any one of items 7 to 9, which is a method for producing the polyamide porous membrane in the form of a hollow fiber membrane,

wherein the second step is the step of using a double-tube nozzle for hollow fiber production with a double-tube structure to discharge the dope solution from an outer annular nozzle while simultaneously discharging an internal coagulation liquid from an inner nozzle to immerse the dope solution and the internal coagulation liquid in a coagulation bath, and

a coagulation liquid having compatibility with the organic solvent used in the dope solution and having low affinity for the polyamide resin is used as at least one of the internal coagulation liquid and the coagulation bath.

Effects of Invention

The polyamide porous membrane of the present invention, which has improved fluid permeation performance based on having a dense layer with a specific structure, can have fluid permeation performance appropriate for the molecular weight cut-off, and in particular, can have improved fluid permeation performance even if it has a molecular weight cut-off of about 200 to 50,000.

Moreover, because of its improved fluid permeation performance, the polyamide porous membrane of the present invention can achieve improved productivity, energy savings, and lower costs in production processes in various industries. In particular, the polyamide porous membrane of the present invention, which is formed of a polyamide resin, has excellent resistance to many types of organic solvents, and can stably maintain the membrane properties even when it is contacted with various types of organic solvents that are industrially used, and can provide a novel industrial process such as a substitute for distillation. Furthermore, because of its high hydrophilicity, the polyamide porous membrane of the present invention when applied to a conventional aqueous filtration process can have improved removal performance by an adsorption effect for a substance to be removed that is hydrophilic, while on the other hand, the polyamide porous membrane of the present invention exhibits less adsorption of hydrophobic substances, which can prevent fouling caused by the hydrophobic substances covering the membrane surface and reducing the treatment flow rate, thereby achieving an efficient filtration process.

Brief Description of Drawings

Fig. 1a shows an exemplary scanning electron microscope image of the surface of the dense layer in the polyamide porous membrane; Fig. 1b shows a binarized image obtained by binarizing the scanning electron microscope image in Fig. 1a using moving average; and Fig. 1c is a power spectrum image obtained by Fourier transformation of the binarized image in Fig. 1b.

Fig. 2a is a schematic diagram of a module for use in measuring the methanol permeability; and Fig. 2b is a schematic diagram of the apparatus for use in measuring the methanol permeability.

Fig. 3 shows scanning electron microscope images of the dense layers in the polyamide hollow fiber membranes of Examples 1 to 4 and Comparative Example 1.

Fig. 4 shows power spectrum images obtained by Fourier transformation of binarized images of the scanning electron microscope images in Fig. 3.

Description of Embodiments

1. Polyamide Porous Membrane

A polyamide porous membrane of the present invention is a polyamide porous membrane comprising a dense layer formed on at least one surface, wherein the polyamide porous membrane has a streak-like recessed portion extending in one direction of a surface of the dense layer, and the streak-like recessed portion has an orientation angle of 0 to 5.0° or 175.0 to 180.0° and an orientation intensity of 1.5 to 2.0 according to the below-described orientation analysis. The polyamide porous membrane of the present invention will be hereinafter described in detail.

[Constituent Material]

The polyamide porous membrane of the present invention is formed of a polyamide resin. When a polyamide resin is used as a constituent resin of the polyamide porous membrane of the present invention, the polyamide porous membrane can be provided with resistance to a wide range of organic solvents.

While the type of polyamide resin to be used as the constituent resin is not limited, examples include polyamide homopolymers, polyamide copolymers, or mixtures thereof. Specific examples of polyamide homopolymers include polyamide 6, polyamide 66, polyamide 46, polyamide 610, polyamide 612, polyamide 11, polyamide 12, polyamide MXD6, polyamide 4T, polyamide 6T, polyamide 9T, and polyamide 10T. Specific examples of polyamide copolymers include copolymers of polyamide with polyethers such as polytetramethylene glycol and polyethylene glycol. While the proportion of the polyamide component in the polyamide copolymer is not limited, the content of the polyamide component is, for example, preferably 70 mol% or more, more preferably 80 mol% or more, still more preferably 90 mol% or more, and particularly preferably 95 mol% or more. When the proportion of the polyamide component in the polyamide copolymer satisfies the above-defined range, the polyamide porous membrane of the present invention can be provided with superior resistance to organic solvents.

From the viewpoint of further improving the resistance to a wide range of organic solvents, one preferred example of the polyamide resin to be used as the constituting resin is an aliphatic polyamide resin having methylene and amide groups at a molar ratio of $-CH_2- : -NHCO- = 4:1$ to $10:1$, and a more preferred example is the aliphatic polyamide resin only.

While the polyamide resin to be used as the constituent resin may or may not be crosslinked, the polyamide resin is preferably not crosslinked from the viewpoint of reducing production costs.

While the relative viscosity of the polyamide resin is not limited, it is, for example, 2.0 to 7.0, preferably 3.0 to 6.0, and more preferably 2.0 to 4.0. When the polyamide resin has this range of relative viscosities, the moldability and the ease of controlling phase separation during the production of the polyamide porous membrane are improved, and the polyamide porous membrane can be provided with excellent shape stability. As used herein, the term "relative viscosity" refers to the value measured with an Ubbelohde viscometer at 25°C, using a solution formed by dissolving 1 g of the polyamide resin in 100 mL of 96% sulfuric acid.

In the present invention, the polyamide resins to be used as constituent resins may be used alone or in combination.

In addition to the above-described polyamide resin, the polyamide porous membrane of the present invention may optionally contain a filler as long as it does not interfere with the effect of the present invention. The inclusion of a filler can improve the strength, elongation, and elastic modulus of the polyamide porous membrane. In particular, the inclusion of a filler also achieves the effect of making the polyamide porous membrane resistant to deformation even when a high pressure is applied during filtration. While the type of filler to be added is not limited, examples include fibrous fillers, such as glass fibers, carbon fibers, potassium titanate whiskers, zinc oxide whiskers, calcium carbonate whiskers, wollastonite whiskers, aluminum borate whiskers, aramid fibers, alumina fibers, silicon carbide fibers, ceramic fibers, asbestos fibers, gypsum fibers, and metal fibers; silicates, such as talc, hydrotalcite, wollastonite, zeolite, sericite, mica, kaolin, clay, pyrophyllite, bentonite, asbestos, and alumina silicate; metal compounds, such as silicon oxide, magnesium oxide, alumina, zirconium oxide, titanium oxide, and iron oxide; carbonates, such as calcium carbonate, magnesium carbonate, and dolomite; sulfates, such as calcium sulfate and barium sulfate; metal hydroxides, such as calcium hydroxide, magnesium hydroxide, and aluminum hydroxide; and inorganic materials, for example, non-fibrous fillers, such as glass beads, glass flakes, glass powder, ceramic beads, boron nitride, silicon carbide, carbon black, silica, and graphite. These fillers may be used alone or in combination. Preferred among these fillers are talc, hydrotalcite, silica, clay, and titanium oxide, and more preferred are talc and clay.

While the filler content is not limited, it is, for example, 5 to 100 parts by mass, preferably 10 to 75 parts by mass, and still more preferably 25 to 50 parts by mass, per 100 parts by mass of the polyamide resin. The inclusion of a filler at this content leads to an improvement in the strength, elongation, and elastic modulus of the polyamide porous membrane.

The polyamide porous membrane of the present invention may also optionally contain additives such as thickeners, antioxidants, surface modifiers, lubricants, and surfactants, in order to control the pore size or improve the membrane performance, for example.

[Shape]

While the shape of the polyamide porous membrane of the present invention is not limited and may be selected from any shapes such as a hollow fiber membrane and a flat sheet membrane, a hollow fiber membrane is preferred in the present invention because, it has a large filtration area per unit volume of the module, and enables efficient filtration treatment.

When the polyamide porous membrane of the present invention is a hollow fiber membrane, the outer diameter of the membrane may be set appropriately according to the use, the thickness of the dense layer, the fluid permeation performance to be imparted, and the like. In view of the relationship with the membrane strength, the pressure loss in the fluid flowing through the hollow portions, the buckling pressure, and the effective membrane area when the membranes are packed into a module, the outer diameter of the hollow fiber membrane is 450 $\mu$m or more, preferably 450 to 4,000 $\mu$m, more preferably 500 to 3,500 $\mu$m, still more preferably 700 to 3,000 $\mu$m, and particularly preferably 700 to 2,000 $\mu$m. Moreover, when the polyamide porous membrane of the present invention is a hollow fiber membrane, other examples of the range of the outer diameter include from 450 to 1,000 $\mu$m and from 500 to 760 $\mu$m. Furthermore, when the polyamide porous membrane of the present invention is in the form of a hollow fiber, the inner diameter of the membrane is not limited but is, for example, 100 to 3,000 $\mu$m, preferably 200 to 2,500 $\mu$m, more preferably 300 to 2,000 $\mu$m, and still more preferably 300 to 1,500 $\mu$m. Moreover, when the polyamide porous membrane of the present invention is a hollow fiber membrane, other examples of the range of the inner diameter include from 200 to 400 $\mu$m and from 230 to 370 $\mu$m. As used herein, each of the outer and inner diameters of the hollow fiber membrane is the value determined by observing five hollow fiber membranes with an optical microscope at 200x magnification, measuring the outer and inner diameters (both at the point of the maximum diameter) of each hollow fiber membrane, and calculating the average value of each of the outer and inner diameters.

While the thickness of the polyamide porous membrane of the present invention may be set appropriately according to the use or shape of the polyamide porous membrane, the thickness of the dense layer, the fluid permeation performance to be imparted, and the like, it is, for example, 50 to 600 $\mu$m, and preferably 100 to 350 $\mu$m. Other examples of the range of the thickness of the polyamide porous membrane of the present invention include from 200 to 500 $\mu$m and from 240 to 390 $\mu$m. When the polyamide porous membrane of the present invention is in the form of a hollow fiber, the thickness of the membrane is the value calculated by dividing the outer diameter minus the inner diameter by 2.

[Dense Layer]

In the polyamide porous membrane of the present invention, a dense layer is formed on at least one surface thereof. As used herein, the term "dense layer" refers to a region where a collection of dense micropores is present, and substantially no pores are observed to be present in a scanning electron microscope (SEM) image at 10,000x magnification. In the polyamide porous membrane of the present invention, the dense layer portions are mostly responsible for the filtration performance such as fluid permeation performance and molecular weight cut-off. When the polyamide porous membrane is a flat sheet membrane, observation of the dense layer with a scanning electron microscope may be performed by cutting the membrane into an appropriate size, placing the sample on the sample stage, subjecting the sample to vapor deposition treatment with Pt, Au, Pd, or the like, and observing the sample. When the polyamide porous membrane is a hollow fiber membrane, observation of the dense layer present on the outer surface may be performed in the same manner as for a flat sheet membrane, by cutting the membrane into an appropriate size, placing the sample on the sample stage, subjecting the sample to vapor deposition treatment with Pt, Au, Pd, or the like, and observing the sample. On the other hand, observation of the dense layer present on the lumen-side surface may be performed by cutting the hollow fiber membrane in the longitudinal direction with a sharp knife such as a scalpel to expose the lumen-side surface, cutting the resulting sample into an appropriate size, placing the sample on the sample stage, subjecting the sample to vapor deposition treatment with Pt, Au, Pd, or the like, and observing the sample.

While the thickness of the dense layer in the polyamide porous membrane of the present invention is not limited, it is, for example, 10 to 2,000 nm, preferably 100 to 1,500 nm, and more preferably 200 to 1,000 nm. As used herein, the thickness of the dense layer is the value determined by measuring, in a SEM image of a cross section of the hollow fiber membrane at 10,000x magnification, distances (thicknesses) of 10 or more regions where substantially no pores are observed to be present, and calculating the average value of the measurements.

It is only required that the dense layer be formed on at least one surface of the polyamide porous membrane of the present invention. For example, when the polyamide porous membrane of the present invention is a hollow fiber membrane, it is only required that the dense layer be formed on at least either one of the lumen-side surface and the outer surface. For example, when the polyamide porous membrane of the present invention is in the form of a flat sheet membrane, it is only required that the dense layer be formed on at least either one of the front surface and the back surface. From the viewpoint of the balance between molecular weight cut-off and fluid permeation performance, one preferred example of the polyamide porous membrane of the present invention is an embodiment in which the dense layer is provided on only one surface. One preferred example of the polyamide porous membrane of the present invention when it is a hollow fiber membrane is an embodiment in which the dense layer is provided on the lumen-side surface, but is not provided on the outer surface.

The polyamide porous membrane of the present invention has a streak-like recessed portion extending in one direction of a surface of the dense layer. The streak-like recessed portion on the surface of the dense layer can be identified by observing the surface of the dense layer with a scanning electron microscope (SEM) at 10,000x magnification. There are a plurality of such streak-like recessed portions on the surface of the dense layer, each streak-like recessed portion extending in the same direction. That is, the plurality of streak-like recessed portions are present on the surface of the dense layer such that their longitudinal directions are substantially parallel to one another.

In the polyamide porous membrane of the present invention, the longitudinal direction of the streak-like recessed portion present on the surface of the dense layer substantially coincides with the stretch direction in uniaxial stretching during production. That is, when the polyamide porous membrane of the present invention is a hollow fiber membrane, the longitudinal direction of the streak-like recessed portion is substantially parallel to the longitudinal direction of the hollow fiber membrane, and when the polyamide porous membrane of the present invention is a flat sheet membrane, the longitudinal direction of the streak-like recessed portion is substantially parallel to the stretch direction of the flat sheet membrane during production.

In the polyamide porous membrane of the present invention, the streak-like recessed portion on the surface of the dense layer satisfies an orientation angle of 0 to 5.0° or 175.0 to 180.0° and an orientation intensity of 1.50 to 2.00 according to the below-described orientation analysis. The formation of the streak-like recessed portion satisfying this orientation angle and this orientation intensity on the surface of the dense layer leads to improved fluid permeation performance.

From the viewpoint of further improving the fluid permeation performance, the orientation angle according to the below-described orientation analysis is preferably 0 to 3.0° or 177.0 to 180.0°, more preferably 1.1 to 2.5° or 177.5 to 178.9°, and still more preferably 1.1 to 2.5° or 177.9 to 178.9°. Moreover, from the viewpoint of further improving the fluid permeation performance, the orientation intensity according to the below-described orientation analysis is preferably 1.50 to 1.90, and more preferably 1.56 to 1.77.

The orientation angle and the orientation intensity can be determined by performing orientation analysis by the following steps (1) to (4):

(1) binarizing an electron microscope image of the surface of the dense layer to obtain a binarized image;
(2) placing the binarized image such that an X-axis direction is parallel to the longitudinal direction of the streak-like recessed portion observed in the dense layer, and subjecting the binarized image to Fourier transformation to obtain a power spectrum image;
(3) determining an approximate ellipse of an angular distribution map of mean amplitudes from the power spectrum image; and
(4) determining, based on the approximate ellipse, an orientation angle and an orientation intensity as follows:

orientation angle: angle (°) of a minor-axis direction of the approximate ellipse with respect to a positive direction of the X-axis
orientation intensity: ratio of major-axis length/minor-axis length in the approximate ellipse.

The method of orientation analysis by steps (1) to (4) above is disclosed in the document by Toshiharu Enomae et al. ("Method of Determining Fiber Orientation of Paper by Fourier Image Analysis"), Summary of 26th Annual Meeting of the Japan Society for the Conservation of Cultural Property, pp. 44-45, 2004), and can be performed according to the method disclosed therein. The following provides a supplemental description of steps (1) to (4) above.

The electron microscope image obtained in step (1) above may be an image observed with a scanning electron microscope (SEM) at 10,000x magnification. The method of observing the dense layer with a scanning electron microscope is as described above. Since the binarized image obtained in step (1) above is subjected to Fourier transform processing, the electron microscope image used in step (1) above is an electron microscope image that is square and in which the number of pixels per side is a power of 2. Specifically, the binarization in step (1) above may be performed using the moving average method.

In step (2) above, the binarized image is placed such that the X-axis direction is parallel to the longitudinal direction (uniaxially stretched direction during production) of the streak-like recessed portion observed in the dense layer, and a Y-axis direction is parallel to a width direction (lateral direction; perpendicular to the uniaxially stretched direction during production) of the streak-like recessed portion, and subjected to Fourier transform processing. The Fourier transform processing in step (2) above may be performed by fast Fourier transform (FFT) processing. On a power spectrum image obtained by Fourier transformation of the binarized image obtained in step (1) above, a spot appears at a position corresponding to the wave number and the direction of the periodic structure.

In step (3) above, an angular distribution map of mean amplitudes (power spectrum pattern) is obtained by representing the power spectrum image obtained in step (2) above in polar coordinates. The streak-like recessed portion on the surface of the dense layer in the polyamide porous membrane of the present invention is oriented, and the angular distribution map of mean amplitudes appears in a shape approximating an ellipse. Thus, an approximate ellipse of the angular distribution map of mean amplitudes is determined in step (3) above.

In step (4) above, based on the approximate ellipse (the major-axis length, the minor-axis length, and the angle in the minor-axis direction) determined in step (3) above, the angle of the approximate ellipse in the minor-axis direction with respect to the positive direction of the X-axis is calculated as the orientation angle (°), and the ratio of the major-axis length/the minor-axis length in the approximate ellipse is calculated as the orientation intensity. As used herein, each of the orientation angle and the orientation intensity is the value calculated as the average value of analytical results in 10 fields in the scanning electron microscope image.

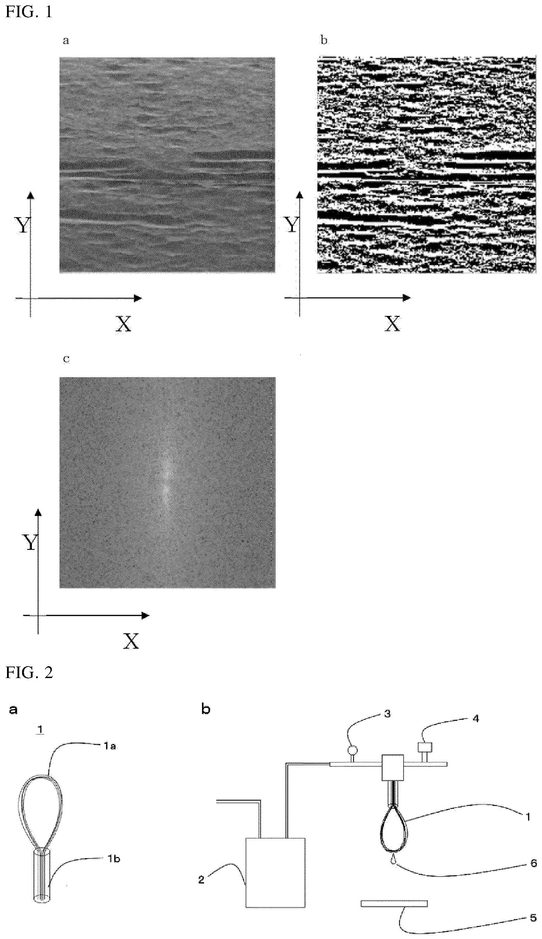

The orientation analysis by steps (1) to (4) above can be performed using known image analysis software. For example, the use of "program for non-destructive analysis of fiber orientation of paper surface FiberOri8single03.exe (V.8.03)" (downloadable from http://www.enomae.com/FiberOri/index.htm) allows the orientation angle and the orientation intensity to be easily determined by performing the orientation analysis by steps (1) to (4) above. The following describes the procedure for determining the orientation angle and the orientation intensity using "program for non-destructive analysis of fiber orientation of paper surface FiberOri8single03.exe (V.8.03)". First, an electron microscope image of the surface of the dense layer (Fig. 1a) is captured into the image analysis software such that the X-axis direction is parallel to the longitudinal direction of the streak-like recessed portion observed in the dense layer. Then, the electron microscope image is binarized using moving average to prepare a binarized image (Fig. 1b). The binarized image is subsequently subjected to fast Fourier transformation (FFT) to prepare a power spectrum image (Fig. 1c). Then, based on the power spectrum image, the orientation angle and the orientation intensity are calculated for output of the values of orientation angle and orientation intensity.

[Porous Regions]

In the polyamide porous membrane of the present invention, regions other than the dense layer have a porous structure. The regions other than the dense layer may also be designated as "porous regions", hereinafter. The term "porous regions" specifically refers to regions where pores are observed to be substantially present in a scanning electron microscope (SEM) image at 2,000x magnification. Since the dense layer portions substantially determine the performance of the polyamide porous membrane of the present invention, the porous regions can be considered as a so-called support layer. The pore size in the porous regions is not limited as long as it does not significantly interfere with fluid permeation and the strength to support the dense layer.

[Molecular Weight Cut-Off and Methanol Permeability]

The molecular weight cut-off of the polyamide porous membrane of the present invention is not limited and may be set appropriately by appropriately adjusting the thickness of the dense layer, the pore size in the regions other than the dense layer, and the like; for example, the molecular weight cut-off is 200 to 50,000, preferably 200 to 20,000, more preferably 800 to 15,000, and still more preferably 920 to 1,400. The molecular weight cut-off represents the pore size of the membrane that can reject 90% or more of a substance with a specific molecular weight, and is represented as the molecular weight of the substance that can be rejected.

As used herein, the molecular weight cut-off is the value determined using the following method. Using a 0.1% by mass solution of a compound of known molecular weight in pure water as the feed fluid, the feed fluid is filtered at a pressure of 0.3 MPa, and the fluid permeated through the membranes is collected. The concentration of the compound in the permeate is measured, and the rejection rate is calculated according to the equation shown below. Using compounds of various molecular weights, the rejection rate for each compound is calculated, and, based on these results, a graph is plotted in which the horizontal axis represents the molecular weights of the compounds used and the vertical axis represents the rejection rates for the compounds, and the molecular weight at the intersection of the resulting approximate curve and the 90% rejection rate is determined as the molecular weight cut-off. When the molecular weight cut-off is in the range of 200 to 50,000, a polyethylene glycol is used as a compound of known molecular weight, and when the molecular weight cut-off is more than 50,000, a dextran is used as a compound of known molecular weight.

[Expression 1]

Rejection rate (%) = {(concentration of the compound in the feed fluid −

concentration of the compound in the permeate)/concentration of the compound in the

feed fluid} × 100

The polyamide porous membrane of the present invention has improved fluid permeation performance, because the polyamide porous membrane has a streak-like recessed portion extending in one direction of a surface of the dense layer, and the streak-like recessed portion has an orientation angle in the above-defined range and an orientation intensity in the above-defined range. The fluid permeation performance that can be exhibited by the polyamide porous membrane of the present invention cannot be unequivocally defined since it varies depending on the molecular weight cut-off, the type of polyamide resin used, and the like; however, for example, the methanol permeability is 0.4 to 50 L/(m$^2$·bar·h), preferably 0.6 to 40 L/(m$^2$·bar·h), more preferably 0.8 to 30 L/(m$^2$·bar·h), and still more preferably 0.8 to 19 L/(m$^2$·bar·h).

When the polyamide porous membrane is a hollow fiber membrane, the methanol permeability as used herein is the value measured using internal pressure filtration, and is the value measured according to the following procedure: First, 10 hollow fiber membranes are cut into a length of 30 cm, aligned and bundled to prepare bundled hollow fiber membranes. Next, a rigid nylon tube with an outer diameter of 8 mm, an inner diameter of 6 mm, and a length of 50 mm is prepared, and, through one end opening of the tube, a rubber stopper with a length of about 20 mm is inserted to plug the one end opening. Next, a two-part mixture, room temperature curable epoxy resin is inserted into the opening opposite the opening with the rubber stopper to fill the inner space of the tube with the epoxy resin. Then, the bundled hollow fiber membranes prepared above are bent in a substantially U-shape, and both ends of the hollow fiber membranes are inserted into the tube filled with the epoxy resin, until the tips of the ends touch the rubber stopper. In this state, the epoxy resin is allowed to cure. Then, the rubber stopper-side region of the cured epoxy resin portions is cut together with the tube to produce a module in which the hollow portions at both ends of the hollow fiber membranes are open. Fig. 2a shows a schematic diagram of this module. Then, the module is mounted on the apparatus as shown in Fig. 2b, and methanol (100% methanol) at 25°C is passed through the inside of the hollow fiber membranes of the module at a pressure of about 0.3 MPa for a certain time. The volume of methanol permeated out of the hollow fiber membranes is determined, and the methanol permeability (L/(m$^2$·bar·h)) is calculated according to the following equation:

[Expression 2]

Methanol permeability = volume (L) of methanol permeated out of the hollow

fiber membranes/[inner diameter (m) of the hollow fiber membranes × 3.14 × effective

filtration length (m) of the hollow fiber membranes × 10 (number of membranes) ×

{[pressure (bar)} × time (h)]

Effective filtration length of the hollow fiber membranes: the length of the portions where the surface of the hollow fiber membranes in the module is not coated with the epoxy resin

When the polyamide porous membrane is a flat sheet membrane, the methanol permeability as used herein is the value measured using dead-end filtration, and is the value measured according to the following procedure: Using a flat sheet membrane cross-flow tester (for example, the Sepa-CF flat sheet membrane test cell from GE Water Technologies) connected to a high-pressure pump, the polyamide porous membrane in the form of a flat sheet membrane cut into a predetermined size (19.1 cm × 14.0 cm, effective membrane area in the cell: 155 cm$^2$) is fixed to the cell, methanol at 25°C is passed, and methanol permeated at a predetermined pressure is collected. The volume (L) of the collected methanol is measured, and the methanol permeability (L/(m$^2$·bar·h)) is determined according to the following equation:

[Expression 3]

$$\text{Methanol permeability} = \text{volume (L) of methanol permeated through the flat sheet membrane}/[\text{area (m}^2\text{) of the flat sheet membrane} \times \{[\text{pressure (bar)}\} \times \text{time (h)}]$$

When the molecular weight cut-off of the polyamide porous membrane of the present invention is more than 1,000, preferred examples of the range of the methanol permeability that can be achieved for each range of molecular weight cut-offs include the following: The molecular weight cut-off is 1,100 to 2,000, and the methanol permeability is 5 to 50 L/(m²·bar·h); preferably, the molecular weight cut-off is 1,200 to 1,500, and the methanol permeability is 5 to 30 L/(m²·bar·h); more preferably, the molecular weight cut-off is 1,200 to 1,500, and the methanol permeability is 8 to 20 L/(m²·bar·h); and still more preferably, the molecular weight cut-off is 1,200 to 1,400, and the methanol permeability is 9.4 to 19 L/(m²·bar·h).

Moreover, when the molecular weight cut-off of the polyamide porous membrane of the present invention is 1,000 or less, preferred examples of the range of the methanol permeability that can be achieved for each range of molecular weight cut-offs include the following: The molecular weight cut-off is 200 to 1,000, and the methanol permeability is 0.8 to 10 L/(m²·bar·h); preferably, the molecular weight cut-off is 900 to 1,000, and the methanol permeability is 0.8 to 5.0 L/(m²·bar·h); more preferably, the molecular weight cut-off is 900 to 1,000, and the methanol permeability is 0.8 to 3.0 L/(m²·bar·h); and still more preferably, the molecular weight cut-off is 920 to 990, and the methanol permeability is 0.8 to 2.9 L/(m²·bar·h).

[Organic Solvent Resistance]

Since the polyamide porous membrane of the present invention is formed of a polyamide resin, it has the property of stably maintaining the membrane structure by inhibiting a change in strength and elongation, even when it is contacted with various types of organic solvents (organic solvent resistance). More specifically, the polyamide porous membrane of the present invention has resistance to organic solvents such as alcohols, aprotic polar solvents, hydrocarbons, higher fatty acids, ketones, esters, and ethers. Specific examples of types of these organic solvents include the following:

Alcohols: primary alcohols, such as methanol, ethanol, n-propanol, n-butanol, and benzyl alcohol; secondary alcohols, such as isopropyl alcohol and isobutanol; tertiary alcohols, such as tertiary butyl alcohol; and polyhydric alcohols, such as ethylene glycol, diethylene glycol, triethylene glycol, tetraethylene glycol, propylene glycol, 1,3-butanediol, and glycerin.
Ketones: acetone, methyl ethyl ketone, cyclohexanone, diisopropyl ketone, and the like.
Ethers: tetrahydrofuran, diethyl ether, diisopropyl ether, 1,4-dioxane, and the like, and glycol ethers, such as ethylene glycol monomethyl ether, diethylene glycol monomethyl ether, and propylene glycol monomethyl ether.
Aprotic polar solvents: N,N-dimethylformamide, N,N-dimethylacetamide, dimethyl sulfoxide, N-methyl-2-pyrrolidone, sulfolane, and the like.
Esters: ethyl acetate, isobutyl acetate, ethyl lactate, dimethyl phthalate, diethyl phthalate, ethylene carbonate, propylene carbonate, propylene glycol monomethyl ether acetate, and the like.
Hydrocarbons: petroleum ether, pentane, hexane, heptane, benzene, toluene, xylene, liquid paraffin, gasoline, and mineral oil.
Higher fatty acids: fatty acids with 4 or more (preferably 4 to 30) carbon atoms other than those in carboxyl groups, such as oleic acid, linoleic acid, and linolenic acid.

In particular, a preferred example of the organic solvent resistance of the polyamide porous membrane of the present invention is having resistance to at least one, preferably all of, the below-listed organic solvents:

Alcohols: isopropyl alcohol, benzyl alcohol, ethylene glycol, and glycerin.
Ketones: acetone, methyl ethyl ketone, and cyclohexanone.
Ethers: tetrahydrofuran, diethyl ether, and propylene glycol monomethyl ether.
Aprotic polar solvents: N,N-dimethylformamide, N,N-dimethylacetamide, dimethyl sulfoxide, and N-methyl-2-pyrrolidone.
Esters: ethyl acetate, isobutyl acetate, and dimethyl phthalate.
Hydrocarbons: hexane, heptane, benzene, toluene, gasoline, and mineral oil.
Higher fatty acids: oleic acid and linoleic acid.

The organic solvent resistance of the polyamide porous membrane of the present invention is specifically such that, for example, when immersed in the above-described organic solvent at 25°C for 14 days, the change rate in the tensile strength and elongation of the ultrafiltration membrane after immersion is ± 30% or less, and preferably less than ± 20%, compared to the tensile strength and elongation before immersion. Specifically, the change in tensile strength and elongation is calculated according to the following equation:

[Expression 4]

$$\text{Change rate (\%)} = \{(\text{tensile strength or elongation before immersion} - \text{tensile strength or elongation after immersion})/\text{tensile strength or elongation before immersion}\} \times 100$$

When the polyamide porous membrane is a hollow fiber membrane, the strength and elongation of the polyamide porous membrane are the values measured under the conditions described in the [Tensile Strength and Elongation] section above. When the polyamide porous membrane is a flat sheet membrane, the strength and elongation of the polyamide porous membrane are the values measured under the conditions described in the [Tensile Strength and Elongation] section above, except that a sample prepared by cutting the flat sheet membrane into a rectangular shape with a width of 10 mm and a length of 100 mm is used.

[Uses]

The polyamide porous membrane of the present invention is used as an ultrafiltration membrane or a nanofiltration membrane in fields such as the semiconductor industry, chemical industry, food industry, pharmaceutical industry, and medical goods industry. As used herein, the term "ultrafiltration" or "ultrafiltration membrane" refers to filtration in which the molecular weight cut-off is set in the range of 1,000 to 1,000,000 or a filtration membrane with a molecular weight cut-off in the range of 1,000 to 1,000,000. As used herein, the term "nanofiltration" or "nanofiltration membrane" refers to filtration in which the molecular weight cut-off is set in the range of 200 to 1,000 or a filtration membrane with a molecular weight cut-off in the range of 200 to 1,000.

Moreover, the polyamide porous membrane of the present invention has resistance to various organic solvents, and thus, can be suitably used in the filtration of fluids to be treated containing organic solvents.

The polyamide porous membrane of the present invention is preferably used by incorporating the polyamide porous membranes of the present invention into a filtration membrane module as described below.

Alternatively, the polyamide porous membrane of the present invention may be provided as a freestanding membrane by itself, or may be in a form laminated on a support of a microfiltration membrane. The material of the support is preferably resistant to organic solvents, and specific examples include polymer materials, such as polyamides, polyethylenes, polypropylenes, polytetrafluoroethylenes, polyphenylene sulfides, and polyetheretherketones; and inorganic materials, such as sintered metals and ceramics.

### 2. Method for Producing Porous Polyamide Membrane

While the method for producing the polyamide porous membrane of the present invention is not limited as long as it produces a polyamide porous membrane in which a streak-like recessed portion having the above-described orientation angle and orientation intensity is formed on a surface of a dense layer, one preferred example is a method comprising the below-described first to fourth steps. In the polyamide porous membrane of the present invention, a dense layer is formed on at least one surface, and regions other than the dense layer have a porous structure.

This polyamide porous membrane is difficult to obtain under production conditions employing a known and common method, i.e., thermally induced phase separation (TIPS) or non-solvent induced phase separation (NIPS) alone; whereas the method comprising the below-described first to fourth steps adopts the principles of both TIPS and NIPS, and performs uniaxial stretching under predetermined conditions, and can thereby efficiently produce the polyamide porous membrane of the present invention.

First step: preparing a dope solution by dissolving a polyamide resin in an organic solvent at a temperature of 100°C or more, the organic solvent having a boiling point of 150°C or more and incompatible with the polyamide resin at a temperature of less than 100°C.

Second step: extruding the dope solution in a predetermined shape into a coagulation bath at 100°C or less to solidify the polyamide resin into a membrane, wherein at least one surface of the dope solution extruded in the predetermined shape is contacted with a coagulation liquid having compatibility with the organic solvent used in the dope solution and having low affinity for the polyamide resin to form a polyamide porous membrane.

Third step: extracting and removing the coagulation liquid undergoing phase separation in the polyamide porous membrane formed in the second step.

Fourth step: uniaxially stretching the polyamide porous membrane after the third step simultaneously with or after drying.

Each of the first to fourth steps will be hereinafter described in detail.

[First Step]

In the first step, a dope solution is prepared by dissolving a polyamide resin in an organic solvent at a temperature of 100°C or more, the organic solvent having a boiling point of 150°C or more and incompatible with the polyamide resin at a temperature of less than 100°C.

Examples of the organic solvent having a boiling point of 150°C or more and incompatible with the polyamide resin at a temperature of less than 100°C include aprotic polar solvents, glycerin ethers, polyhydric alcohols, organic acids and organic acid esters, and higher alcohols. Specific examples of aprotic polar solvents include sulfolane, dimethylsulfone, dimethylsulfoxide, γ-butyrolactone, δ-valerolactone, ε-caprolactone, N,N-dimethylformamide, N,N-dimethylacetamide, N-methyl-2-pyrrolidone, ethylene carbonate, and propylene carbonate. Specific examples of glycerin ethers include diethylene glycol dimethyl ether, diethylene glycol diethyl ether, triethylene glycol dimethyl ether, diethylene glycol dibutyl ether, and tetraethylene glycol dimethyl ether. Specific examples of polyhydric alcohols include glycerin, ethylene glycol, diethylene glycol, triethylene glycol, propylene glycol, hexylene glycol, 1,3-butanediol, and polyethylene glycol (molecular weight: 100 to 10,000). Specific examples of organic acids and organic acid esters include dimethyl phthalate, diethyl phthalate, diisopropyl phthalate, dibutyl phthalate, butyl benzyl phthalate, methyl salicylate, oleic acid, palmitic acid, stearic acid, and lauric acid. From the viewpoint of obtaining a polyamide porous membrane with a higher strength, preferred among these organic solvents are aprotic polar solvents and polyhydric alcohols; more preferred are sulfolane, dimethylsulfone, γ-butyrolactone, δ-valerolactone, ε-caprolactone, propylene glycol, hexylene glycol, 1,3-butanediol, and polyethylene glycol (molecular weight: 100 to 600); and still more preferred are sulfolane, dimethylsulfone, γ-butyrolactone, δ-valerolactone, and ε-caprolactone. These organic solvents may be used alone or in combination. While a sufficient effect can be obtained by using one of these organic solvents alone, it may be possible to produce a more effective polyamide porous membrane by using a mixture of two or more of these organic solvents, because of a difference in the order of phase separation and structure.

While the concentration of the polyamide resin in the dope solution is not limited, it is, for example, 5 to 50% by mass, preferably 10 to 40% by mass, and still more preferably 12 to 35% by mass. When the concentration of the polyamide resin in the dope solution satisfies the above-defined range, the polyamide porous membrane can be provided with excellent strength and fluid permeation performance.

Moreover, in the first step, when dissolving the polyamide resin in the organic solvent, the temperature of the solvent needs to be adjusted to 100°C or more. Specifically, the polyamide resin is preferably dissolved in the organic solvent at a temperature 10 to 50°C higher, preferably 20 to 40°C higher, than the phase separation temperature of the dope solution to be prepared. The phase separation temperature of the dope solution refers to the temperature at which liquid-liquid phase separation or solid-liquid phase separation due to crystal precipitation occurs by gradually cooling the mixture obtained by mixing the polyamide resin and the organic solvent at a sufficiently high temperature. The phase separation temperature may be measured using, for example, a microscope equipped with a hot stage.

In the first step, the temperature condition for dissolving the polyamide resin in the organic solvent may be set appropriately in the range of temperatures of 100°C or more as indicated above, according to the type of polyamide resin and the type of organic solvent used. The temperature condition is preferably 120 to 250°C, more preferably 140 to 220°C, and still more preferably 160 to 200°C.

The dope solution may also optionally contain fillers, thickeners, antioxidants, surface modifiers, lubricants, surfactants, and the like, to control the pore size or improve the performance of the polyamide porous membrane, for example.

The dope solution prepared in the first step is subjected to the second step while maintaining the temperature (that is, 100°C or more).

[Second Step]

The second step is the step of extruding the dope solution prepared in the first step in a predetermined shape into a coagulation bath at 100°C or less to solidify the polyamide resin into a membrane, wherein at least one surface of the dope solution extruded in the predetermined shape is contacted with a coagulation liquid (which may also be designated as "dense layer-forming coagulation liquid, hereinafter) having compatibility with the organic solvent used in the dope solution and having low affinity for the polyamide resin to form a polyamide porous membrane.

In the second step, the dope solution extruded in the predetermined shape into the coagulation bath forms a dense layer on the surface that is contacted with the dense layer-forming coagulation liquid. Near the surface where the dope solution is contacted with the dense layer-forming coagulation liquid, non-solvent induced phase separation by solvent exchange proceeds more predominantly than thermally induced phase separation by cooling, which allows a structure denser than that by conventional TIPS to be formed on the surface.

To form the dense layer on only one surface of the polyamide porous membrane, in the second step, the dense layer-forming coagulation liquid may be contacted with one surface of the dope solution extruded in the predetermined shape, while a coagulation liquid (which may also be designated as "porous structure-forming coagulation liquid, hereinafter) having compatibility with the organic solvent used in the dope solution and having high affinity for the polyamide resin may be contacted with the other surface of the dope solution. Alternatively, to form the dense layer on both surfaces of the polyamide porous membrane, in the second step, the dense layer-forming coagulation liquid may be contacted with both surfaces of the dope solution extruded in the predetermined shape.

The dense layer-forming coagulation liquid is specifically a solvent that is compatible with the organic solvent used in the dope solution at a temperature of 50°C or less, but does not dissolve the polyamide resin at a temperature less than or equal to the boiling point or a temperature of 200°C or less. Specific examples of the dense layer-forming coagulation liquid include aqueous solvents, such as water and aqueous solutions with a water content of 80% by mass or more; monovalent lower alcohols, such as 1-propanol, 2-propanol, and isobutanol; polyethylene glycol with an average molecular weight of 300 or more, polypropylene glycol with an average molecular weight of 400 or more, glycol ethers, such as diethylene glycol diethyl ether, triethylene glycol monomethyl ether, and propylene glycol monoethyl ether; and triacetin and glycol acetates, such as propylene glycol monoethyl ether acetate. Among these, preferred are polyethylene glycol with an average molecular weight of 300 to 1,000, polypropylene glycol with an average molecular weight of 400 to 1,000, triacetin, and triethylene glycol monomethyl ether; more preferred is polyethylene glycol with an average molecular weight of 300 to 700; and still more preferred is polyethylene glycol with an average molecular weight of 400 to 600. These solvents may be used alone or in combination. As used herein, the average molecular weight of polyethylene glycol or polypropylene glycol is the number average molecular weight calculated based on the hydroxyl number measured according to JIS K 1557-6: 2009 "Plastics-Polyols for use in the production of polyurethanes- Part 6: Determination of hydroxyl number by NIR (Near-Infrared) spectroscopy".

The dense layer-forming coagulation liquid may also contain a solvent used in the porous structure-forming coagulation liquid (a solvent that is compatible with the organic solvent used in the dope solution at a temperature of 25°C or less, and dissolves the polyamide resin at a temperature less than or equal to the boiling point), such as glycerin, as long as it is capable of forming the dense layer. When the dense layer-forming coagulation liquid contains the solvent used in the porous structure-forming coagulation liquid, the solvent content is, for example, 20% by mass or less, and preferably 10% by mass or less.

The porous structure-forming coagulation liquid may be any solvent that is compatible with the organic solvent used in the dope solution at a temperature of 25°C or less, and dissolves the polyamide resin at a temperature less than or equal to the boiling point. Specific examples of the porous structure-forming coagulation liquid include glycerin, ethylene glycol, diethylene glycol, triethylene glycol, tetraethylene glycol, polyethylene glycol 200, propylene glycol, 1,3-butanediol, sulfolane, N-methyl-2-pyrrolidone, γ-butyrolactone, δ-valerolactone, and aqueous solutions containing 20% by mass or more of these solvents. Among these, preferred are at least one selected from the group consisting of glycerin, propylene glycol, diethylene glycol, and polyethylene glycol 200, as well as aqueous solutions containing 25 to 75% by mass of these solvents; and more preferred are at least one selected from the group consisting of glycerin, diethylene glycol, tetraethylene glycol, and propylene glycol, as well as aqueous solutions containing 40 to 80% by mass (preferably 40 to 60% by mass) of at least one of these solvents.

When a hollow fiber membrane is to be formed as the polyamide porous membrane, in the second step, a double-tube nozzle for hollow fiber production with a double-tube structure may be used to discharge the dope solution from an outer annular nozzle while simultaneously discharging an internal coagulation liquid from an inner nozzle to immerse the dope solution and the internal coagulation liquid in a coagulation bath. In this case, the dense layer-forming coagulation liquid may be used as at least one of the internal coagulation liquid and the coagulation bath. When the dense layer-forming coagulation liquid is used as both the internal coagulation liquid and the coagulation bath, a hollow fiber membrane is obtained in which the dense layer is formed on both the lumen-side surface and the outer surface, and the inside is formed of porous regions. Alternatively, when the dense layer-forming coagulation liquid is used as the internal coagulation liquid, and the porous structure-forming coagulation liquid is used as the coagulation bath, a hollow fiber membrane is obtained in which the dense layer is formed on the lumen-side surface, and the inside and the outer surface are formed of porous regions. Alternatively, when the porous structure-forming coagulation liquid is used as the internal coagulation liquid, and the dense layer-forming coagulation liquid is used as the coagulation bath, a hollow fiber membrane is obtained in which the dense layer is formed on the outer surface, and the lumen-side surface and the inside are formed of porous regions. Since the internal coagulation liquid used for forming the hollow fiber membrane passes through the double-tube nozzle, it preferably does not contain water having a boiling point less than or equal to the temperature of the double-tube nozzle.

The double-tube nozzle for hollow fiber production may be a spinneret having a double-tube structure, such as that used in the production of core-sheath composite fibers by melt spinning. The diameter of the outer annular nozzle and the diameter of the inner nozzle of the double-tube nozzle for hollow fiber production may be set appropriately according to the inner and outer diameters of the hollow fiber membrane.

The flow rate of the dope solution when discharged from the outer annular nozzle of the double-tube nozzle for hollow fiber production varies with the slit width and thus, is not limited; for example, it is 2 to 30 g/min, preferably 3 to 20 g/min, and more preferably 5 to 15 g/min. The flow rate of the internal coagulation fluid is set appropriately in consideration of the diameter of the inner nozzle of the double-tube nozzle for hollow fiber production, the type of internal liquid used, the flow rate of the dope solution, and the like; for example, it is 0.1 to 2 times, preferably 0.2 to 1 times, and more preferably 0.4 to 0.7 times the flow rate of the dope solution.

When a flat sheet membrane is to be formed as the polyamide porous membrane, in the second step, the dense layer-forming coagulation liquid may be used as the coagulation bath, and the dope solution may be extruded in a predetermined shape into the coagulation bath and immersed therein.

In the second step, the temperature of the coagulation bath may be any temperature that is 100°C or less; preferably, it is -20 to 100°C, more preferably 0 to 60°C, still more preferably 2 to 20°C, and particularly preferably 2 to 10°C. The preferred temperature of the coagulation bath may vary depending on the organic solvent used in the dope solution, the composition of the coagulation liquid, and the like; however, in general, thermally induced phase separation tends to proceed preferentially when the coagulation bath has a lower temperature, and non-solvent induced phase separation tends to proceed preferentially when the coagulation bath has a higher temperature. That is, when producing a hollow fiber membrane in which the dense layer is formed on the lumen-side surface, it is preferred to set the coagulation bath at a lower temperature to increase the pore size in the dense layer on the lumen-side surface, while it is preferred to set the coagulation bath at a higher temperature to further densify the denser layer on the lumen-side surface, and make the internal structure coarse.

When a hollow fiber membrane is to be formed as the polyamide porous membrane, the temperature of the internal coagulation liquid may be about the set temperature of the double-tube nozzle, for example, 120 to 250°C, preferably 160 to 230°C, and more preferably 180 to 220°C.

By performing the second step as described above, the dope solution is solidified in the coagulation bath, and simultaneously, a polyamide porous membrane is formed having a dense layer formed on at least one surface.

[Third Step]

In the third step, the coagulation liquid undergoing phase separation in the polyamide porous membrane formed in the second step is extracted and removed.

The coagulation liquid undergoing phase separation in the polyamide porous membrane may be extracted and removed by immersing the polyamide porous membrane formed in the second step in an extraction solvent, or by showering the polyamide porous membrane formed in the second step with an extraction solvent.

The extraction solvent to be used in the extraction and removal in the third step is preferably a solvent that is inexpensive, and has a low boiling point and can be readily separated after the extraction by utilizing a difference in boiling point or the like. Examples of the extraction solvent include water, glycerin, methanol, ethanol, isopropanol, acetone, diethyl ether, hexane, petroleum ether, and toluene. Preferred among these are water, methanol, ethanol, isopropanol, and acetone; and more preferred are water, methanol, and isopropanol. For extraction of a water-insoluble organic solvent, such as a phthalic acid ester or a fatty acid, isopropyl alcohol, petroleum ether, or the like can be suitably used.

When the coagulation liquid is extracted and removed by immersing the polyamide porous membrane in the extraction solvent, the time for immersing the polyamide porous membrane in the extraction solvent is not limited but is, for example, 0.2 hour to 2 months, preferably 0.5 hour to 1 month, and still more preferably 2 hours to 10 days. For effective extraction and removal of the coagulation liquid remaining in the polyamide porous membrane, the extraction solvent may be replaced or stirred.

The polyamide porous membrane from which the coagulation liquid undergoing phase separation has been extracted and removed as described above is subjected to the below-described fourth step.

[Fourth Step]

In the fourth step, the polyamide porous membrane after the third step is uniaxially stretched simultaneously with or after drying. In the polyamide porous membrane after the third step, a streak-like recessed portion having the above-described orientation angle and orientation intensity is not formed on a surface of the dense layer; however, after the fourth step is performed, a streak-like recessed portion having the above-described orientation angle and orientation intensity is formed on a surface of the dense layer.

In the fourth step, the polyamide porous membrane is uniaxially stretched simultaneously with or after drying of the polyamide porous membrane having the extraction solvent adhered thereto after the third step. If the polyamide porous membrane is dried after it is uniaxially stretched with the extraction solvent adhered thereto after the third step, the stretched polyamide porous membrane significantly shrinks upon drying, and a streak-like recessed portion having the above-described orientation angle and orientation intensity cannot be formed on a surface of the dense layer; consequently, the fluid permeation performance cannot be sufficiently improved.

To uniaxially stretch the polyamide porous membrane simultaneously with drying, the polyamide porous membrane may be dried while tension for the stretching is being applied. The temperature condition for uniaxially stretching the polyamide porous membrane simultaneously with drying is not limited as long as it enables both drying and stretching; for example, it is 40°C or more, preferably 40 to 160°C, more preferably 50 to 140°C, and still more preferably 120 to 140°C.

Alternatively, when the polyamide porous membrane is uniaxially stretched after drying, the temperature condition for dying is not limited as long as it allows the extraction solvent adhered to be volatilized off; for example, it is 40°C or more, preferably 40 to 160°C, more preferably 50 to 140°C, and still more preferably 120 to 140°C. When the polyamide porous membrane is uniaxially stretched after drying, the temperature condition for stretching is not limited, and may be -10 to 140°C, and preferably 0 to 120°C. However, from the viewpoint of further improving the fluid permeation performance, the temperature condition is preferably more than or equal to the glass transition point of the polyamide resin used, more preferably 50 to 120°C, and still more preferably 60 to 100°C.

The uniaxial stretching may be performed using a known method, for example, it may be performed continuously by taking up the polyamide porous membrane from a low-speed roll to a high-speed roll. Alternatively, the stretching may be performed with a tensile testing machine or the like while holding both ends of the polyamide porous membrane cut to a certain length, or may be performed by manual stretching. When the polyamide porous membrane is a hollow fiber membrane, it may be uniaxially stretched in the longitudinal direction of the hollow fiber membrane. When the polyamide porous membrane is a flat sheet membrane, it may be uniaxially stretched either in the length direction or width direction of the flat sheet membrane.

The stretching ratio for the uniaxial stretching is, for example, 1.2 to 5 times, and preferably 1.2 to 3 times. From the viewpoint of increasing the strength of the polyamide porous membrane, and imparting excellent water pressure resistance, the stretching ratio is preferably 1.2 to 2.4 times, and more preferably 1.5 to 2.0 times.

### 3. Filtration Module

The polyamide porous membranes of the present invention are housed in a module casing with an inlet for the fluid to be treated, an outlet for the permeate, and the like, and used as a filtration membrane module.

When the polyamide porous membranes of the present invention are in the form of hollow fibers, the polyamide porous membranes are used as a hollow fiber membrane module.

Specifically, the hollow fiber membrane module may be any module configured such that a bundle of the hollow fiber-shaped polyamide porous membranes of the present invention is housed in the module casing, and one or both ends of the hollow fiber-shaped polyamide porous membranes are sealed with a potting material and anchored. The hollow fiber membrane module may be any module having an opening connected to a flow passage passing the outer wall side of the hollow fiber-shaped polyamide porous membranes and an opening connected to the hollow portions of the hollow fiber-shaped polyamide porous membranes, as an inlet for the fluid to be treated or an outlet for the filtrate.

The hollow fiber membrane module is not limited in shape, and may be a dead-end module or a crossflow module. Specific examples of shapes of the hollow fiber membrane module include a dead-end module produced by packing a hollow fiber membrane bundle bent in a U-shape, and sealing ends of the hollow fiber-shaped polyamide porous membrane bundle and then cutting the ends to make them open; a dead-end module produced by packing straight a hollow fiber-shaped polyamide porous membrane bundle whose hollow opening at one end is closed by heat sealing or the like, and sealing an open end of the hollow fiber-shaped polyamide porous membrane bundle and then cutting the end to make it open; a dead-end module produced by packing straight a hollow fiber-shaped polyamide porous membrane bundle, and sealing the ends of the hollow fiber-shaped polyamide porous membrane bundle and then cutting only one end to make the opening exposed; and a crossflow module produced by packing straight a hollow fiber-shaped polyamide porous membrane bundle, sealing the ends of the hollow fiber-shaped polyamide porous membrane bundle, cutting the sealed portions at the ends of the hollow fiber-shaped polyamide porous membrane bundle, and creating two flow passages on the side surface of the filter case.

While the packing ratio of the hollow fiber-shaped polyamide porous membranes inserted into the module casing is not limited, it may be such that, for example, the volume of the hollow fiber-shaped polyamide porous membranes including the volume of the hollow portions to the internal volume of the module casing is 30 to 90% by volume, preferably 35 to 75% by volume, and more preferably 45 to 65% by volume. When the packing ratio satisfies these ranges, it is possible to facilitate the operation of packing the hollow fiber-shaped polyamide porous membranes into the module casing, and facilitate the flow of the potting material between the hollow fiber-shaped polyamide porous membranes, while ensuring a sufficient filtration area.

While the potting material used to produce the hollow fiber membrane module is not limited, it preferably contains an organic solvent resistance when the hollow fiber membrane module is for use in the treatment of an organic solvent, and examples of such potting agents include polyamides, silicone resins, epoxy resins, melamine resins, polyethylenes, polypropylenes, phenolic resins, polyimides, and polyurea resins. Preferred among these potting materials are those with low shrinkage or swelling upon curing, and a hardness that is not excessively high. Preferred examples of potting materials include polyamides, silicone resins, epoxy resins, and polyethylenes. These potting materials may be used alone or in combination.

Examples of materials of the module casing used for the hollow fiber membrane module include, but are not limited to, polyamides, polyesters, polyethylenes, polypropylenes, polyvinylidene fluorides, polytetrafluoroethylenes, polyvinyl chlorides, polysulfones, polyethersulfones, polycarbonates, polyarylates, and polyphenylene sulfides. Preferred among these are polyamides, polyethylenes, polypropylenes, polytetrafluoroethylenes, polycarbonates, polysulfones, and polyethersulfones, and more preferred are polyamides, polyethylenes, polypropylenes, and polytetrafluoroethylenes.

When the polyamide porous membranes of the present invention are in the form of flat sheet membranes, the polyamide porous membranes are used as a sheet-type module, such as a plate-and-frame-type or a stacked-type module, a spiral-type module, a rotating flat sheet membrane-type module, or the like.

The filtration membrane module produced using the polyamide porous membranes of the present invention is used in fields such as the semiconductor industry, chemical industry, food industry, pharmaceutical industry, and medical goods industry, for ultrafiltration or nanofiltration applications for removal of foreign matter in solvents, concentration of useful components in solvents, solvent recovery, water purification, and the like. In one embodiment, the filtration membrane module produced using the polyamide porous membranes of the present invention is suitable for use in the filtration of fluids to be treated containing organic solvents.

In one embodiment, the filtration membrane module produced using the polyamide porous membranes of the present invention is suitable for use in the filtration of fluids to be treated containing organic solvents.

Examples

The present invention will be hereinafter described in more detail with examples; however, the present invention is not limited to these examples.

1. Measurement Methods

[Outer and Inner Diameters of Hollow Fiber Membrane and Thickness of Hollow Fiber Membrane]

Five hollow fiber membranes were observed with an optical microscope at 200x magnification, the outer and inner diameters (both at the point of the maximum diameter) of each hollow fiber membrane were measured, and the average value of each of the outer and inner diameters was determined. The thickness of the hollow fiber membrane was calculated by dividing the outer diameter minus the inner diameter by 2.

[Orientation Analysis (Orientation Angle and Orientation Intensity)]

A sample was provided by cutting the polyamide hollow fiber membrane into about 1 cm, and dividing the membrane into two in the length direction to expose the dense layer on the lumen-side surface. The sample was placed on the sample stage, and, using a vapor deposition apparatus (MSP-1S-type magnetron sputtering apparatus available from VACUUM DEVICE), the dense layer of the sample was subjected to vapor deposition treatment with platinum at a discharge voltage of 45 mA for a vapor deposition time of 15 seconds. Then, an image of the dense layer observed with a scanning electron microscope (SEM) at 1,000x magnification was obtained as an image of (total number of pixels: 262,144, number of vertical pixels: 512, number of horizontal pixels: 512) using the image analysis software ImageJ. The resulting image was placed such that the X-axis direction was parallel to the longitudinal direction of streak-like recessed portions observed in the dense layer (longitudinal direction of the polyamide hollow fiber membrane), and the Y-axis direction is parallel to the width direction (lateral direction) of the streak-like recessed portions, and subjected to image analysis using the image analysis software (program for non-destructive analysis of fiber orientation of paper surface FiberOri8single03.exe (V.8.03); downloaded from http://www.enomae.com/FiberOri/index.htm).

The image analysis was performed specifically as follows: The image was binarized using moving average, the binarized image was subsequently subjected to fast Fourier transform (FFT) processing for conversion into a power spectrum image, and the resulting power spectrum image was subjected to orientation analysis to determine the orientation angle and the orientation intensity. The image analysis software used in this measurement was set such that an angular distribution map of mean amplitudes (power spectrum pattern) was obtained from the power spectrum image, an approximate ellipse of the angular distribution map was determined, and the angle of the minor-axis direction of the approximate ellipse with respect to the positive direction of the X-axis was output as the orientation angle (°), and the ratio of the major-axis length/minor-axis length in the approximate ellipse was output as the orientation intensity. Each of the orientation angle and the orientation intensity was determined as the average value of the analytical results in 10 fields in the scanning electron microscope image.

[Methanol Permeability]

First, a module as shown in Fig. 2a was produced. Specifically, 10 hollow fiber membranes were cut into a length of 30 cm, aligned and bundled to prepare bundled hollow fiber membranes. Next, a rigid nylon tube with an outer diameter of 8 mm, an inner diameter of 6 mm, and a length of 50 mm was prepared, and, through one end opening of the tube, a rubber stopper with a length of about 20 mm was inserted to plug the one end opening. Next, a two-part mixture, room temperature curable epoxy resin was inserted into the opening opposite the opening with the rubber stopper to fill the inner space of the tube with the epoxy resin. Then, the bundled hollow fiber membranes prepared above were bent in a substantially U-shape, and both ends of the hollow fiber membranes were inserted into the tube filled with the epoxy resin, until the tips of the ends touched the rubber stopper. In this state, the epoxy resin was allowed to cure. Then, the rubber stopper-side region of the cured epoxy resin portions was cut together with the tube to produce a module in which the hollow portions at both ends of the hollow fiber membranes were open.

Next, the module was mounted on the apparatus as shown in Fig. 2b, and methanol (100% methanol) at 25°C was passed through the inside of the hollow fiber membranes of the module at a pressure of about 0.3 MPa for a certain time. The volume of methanol permeated out of the hollow fiber membranes was determined, and the methanol permeability (L/(m$^2$·bar·h)) was calculated according to the following equation:

[Expression 5]

$$\text{Methanol permeability} = \text{volume (L) of methanol permeated out of the hollow}$$
$$\text{fiber membranes/[inner diameter (m) of the polyamide hollow fiber membranes} \times 3.14$$
$$\times \text{ effective filtration length (m) of the polyamide hollow fiber membranes} \times 10$$
$$\text{(number of membranes)} \times \{[\text{pressure (bar)}\} \times \text{time (h)}]$$

[Molecular Weight Cut-Off]

Using a 0.1% by mass solution of a commercial polyethylene glycol standard for GPC (PEG; Agilent Technologies, molecular weight: 600, 1,000, 4,000, 7,000, 20,000 or 50,000) in methanol as the feed fluid, the feed fluid was passed at a pressure of 0.3 MPa, the permeated fluid was collected, the polyethylene glycol concentration in the permeate was measured by high performance liquid chromatography, and the rejection rate was calculated according to the equation shown below. Based on the result of the rejection rate for the polyethylene glycol of each molecular weight, a graph was plotted in which the horizontal axis represents the molecular weights of the polyethylene glycols used and the vertical axis represents the rejection rates, and the molecular weight at the intersection of the resulting approximate curve and the 90% rejection rate was determined as the molecular weight cut-off.

[Expression 6]

$$\text{Rejection rate (\%)} = \{(\text{concentration of the polyethylene glycol in the feed}$$
$$\text{fluid} - \text{concentration of the polyethylene glycol in the permeate)/concentration of the}$$
$$\text{polyethylene glycol in the feed fluid}\} \times 100$$

[Water Pressure Resistance]

Using the method described in the [Methanol Permeability] section, a module in which the hollow fiber membranes were open at both ends was produced. The resulting module was mounted on the apparatus as shown in Fig. 2b, the module portion while being immersed in water was subjected to a pneumatic pressure of up to 2 MPa from the inside, and examined for the presence of bursts (breaks) in the polyamide hollow fiber membranes. Five modules were produced for each polyamide hollow fiber membrane and tested, and the number of burst modules was determined.

2. Test Example 1

2-1. Production of Hollow Fiber Membranes

[Comparative Example 1]

250 g of polyamide 6 chips (A1030BRT available from UNITIKA LTD., relative viscosity: 3.53) and 750 g of sulfolane (available from Tokyo Chemical Industry) were stirred at 180°C for 1.5 hours to dissolve the chips, and the solution was degassed for 1 hour at a reduced stirring rate to prepare a dope solution. The dope solution was fed to a spinneret maintained at a temperature of 210°C through a metering pump, and extruded at 13.0 g/min. The spinneret had an outer diameter of 1.5 mm and an inner diameter of 0.6 mm. As an internal coagulation liquid (dense layer-forming coagulation liquid), a mixture of polyethylene glycol 400 (PEG400, average molecular weight: 400) and glycerin (Gly) (at a weight ratio of 90 parts by weight of PEG400 to 10 parts by weight of glycerin) was passed at a feed rate of 5.0 g/min. The extruded dope solution was introduced through an air gap of 10 mm into a coagulation bath of a 50% by mass aqueous solution of propylene glycol (PG) (porous structure-forming coagulation liquid) at 5°C, cooled and solidified to form a polyamide hollow fiber membrane, which was taken up at a take-up rate of 20 m/min. The polyamide hollow fiber membrane taken up was immersed in water for 24 hours for solvent extraction (washing) and then dried by passing through a hot-air dryer (chamber temperature: 130°C) without stretching. Thus, a polyamide hollow fiber membrane was obtained.

[Examples 1 to 4]

Polyamide hollow fiber membranes were formed by repeating the operations of Comparative Example 1 under the same conditions until the step before the solvent extraction. The polyamide hollow fiber membranes taken up were immersed in water for 24 hours for solvent extraction. Then, the polyamide hollow fiber membranes were dried and stretched simultaneously by sequentially passing through a feed roller, a hot-air dryer (chamber temperature: 130°C), and a stretching roller. This operation was set such that the polyamide hollow fiber membranes were stretched between the feed roller and the stretching roller, and drying and stretching proceeded simultaneously while the polyamide hollow fiber membranes passed through the hot air dryer. The stretching ratio in this operation was 1.5 times (Example 1), 2 times (Example 2), 2.5 times (Example 3), or 3 times (Example 4).

[Comparative Example 2]

A polyamide hollow fiber membrane was formed by repeating the operations of Comparative Example 1 under the same conditions until the step before the solvent extraction. The polyamide hollow fiber membrane taken up was immersed in water for 24 hours for solvent extraction. Then, the polyamide hollow fiber membrane was dried after stretching, by sequentially passing through a feed roller, a stretching roller, a hot-air dryer (chamber temperature: 130°C), and a take-up roller. This operation was set such that the polyamide hollow fiber membrane was stretched between the feed roller and the stretching roller, and not stretched after the stretching roller. The stretching ratio in this operation was 2 times.

[Example 5]

A polyamide hollow fiber membrane was formed by repeating the operations of Comparative Example 1 under the same conditions until the step before the solvent extraction. The polyamide hollow fiber membrane taken up was immersed in water for 24 hours for solvent extraction. Then, the polyamide hollow fiber membrane was stretched after drying, by sequentially passing through a feed roller, a hot-air dryer (chamber temperature: 130°C), a take-up roller, and a stretching roller. This operation was set such that the polyamide hollow fiber membrane was not stretched between the feed roller and the take-up roller, and the polyamide hollow fiber membrane was stretched only between the take-up roller and the stretching roller. The stretching ratio in this operation was 2 times.

2-2. Evaluation Results of Physical Properties of Hollow Fiber Membranes

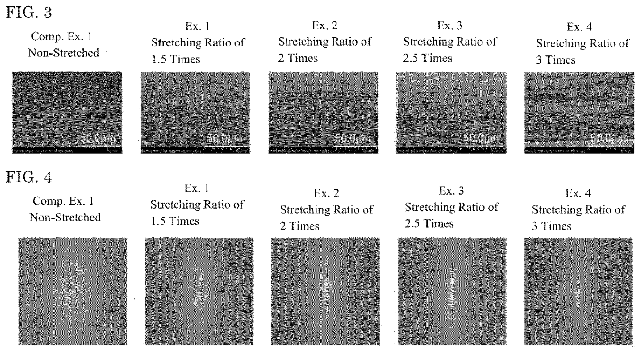

Table 1 shows the production conditions, the results of orientation analysis of the dense layer (orientation angle and orientation intensity), the methanol permeability, the molecular weight cut-off, and the pressure test result for each polyamide hollow fiber membrane. Fig. 3 shows images of the dense layers (on the lumen-side surface) in the polyamide hollow fiber membranes of Examples 1 to 4 and Comparative Example 1 observed with a scanning electron microscope at 1,000x magnification. Fig. 4 shows power spectrum images obtained by Fourier transformation of binarized images of the scanning electron microscope images (1,000x magnification) of the dense layers in the polyamide hollow fiber membranes of Examples 1 to 4 and Comparative Example 1.

Regarding the non-stretched polyamide hollow fiber membrane of Comparative Example 1, the scanning electron microscope image (1,000x magnification) confirmed the formation of a dense layer in which no pores were observed on the lumen-side surface, and the orientation analysis of the dense layer showed that the orientation angle was 169°, and the orientation intensity was 1.19. The polyamide hollow fiber membrane of Comparative Example 1 had a molecular weight cut-off of 12,000, and had a methanol permeability as low as 3.9 L/(m$^2$·bar·h).

Regarding the polyamide hollow fiber membranes of Examples 1 to 4 that were stretched simultaneously with drying, the scanning electron microscope images (1,000x magnification) confirmed that the membranes maintained a dense layer in which no pores were observed on the lumen-side surface, with streak-like recessed portions being formed on the dense layer parallel to the longitudinal direction of the polyamide hollow fiber membranes, and the orientation analysis thereof showed that the orientation angle was in the range of 0 to 5.0° or 175.0 to 180.0°, and the orientation intensity was in the range of 1.5 to 2.0. Moreover, the polyamide hollow fiber membranes of Examples 1 to 4 had a methanol permeability as high as 9.4 to 16 L/(m$^2$·bar·h) while having a molecular weight cut-off equal to that of the non-stretched membrane of Comparative Example 1. In particular, the polyamide hollow fiber membranes of Examples 1 and 2 that were stretched at a stretching ratio of 1.5 to 2.0 times also had excellent pressure resistance.

The polyamide hollow fiber membrane of Example 5 that was stretched after drying was also confirmed to have streak-like recessed portions formed on the dense layer parallel to the longitudinal direction of the polyamide hollow fiber membrane, as in Examples 1 to 4. Moreover, the polyamide hollow fiber membrane of Example 5 also had a higher methanol permeability while having a molecular weight cut-off equal to that of the non-stretched membrane of Comparative Example 1.

On the other hand, the polyamide hollow fiber membrane of Comparative Example 2 that was dried after stretching in a wet state was also confirmed to have streak-like recessed portions formed on the dense layer parallel to the longitudinal direction of the polyamide hollow fiber membrane; however, the molecular weight cut-off and the methanol permeability were similar to those of the membrane of Comparative Example 1, and thus, the functionality was equal to that of the non-stretched membrane of Comparative Example 1.

[Table 1]

| | Resin Used | Production Conditions | | | | Orientation Analysis of Dense Layer | | Methanol Permeability (L/m²·bar·h) | Molecular Weight Cut-Off (Da) | Outer Diameter (μm) | Inner Diameter (μm) | Water Pressure Resistance (Number of Bursts) |
|---|---|---|---|---|---|---|---|---|---|---|---|---|
| | | Solvent for Dope Solution | Internal Coagulation Liquid | Timing of Stretching | Stretching Ratio (Times) | Orientation Angle (°) | Orientation Intensity | | | | | |
| Comp. Ex. 1 | Ny6 | Sulfolane | PEG400/Gly | None | - | 169.0 | 1.19 | 3.9 | 12000 | 890 | 490 | 0/5 |
| Ex. 1 | Ny6 | Sulfolane | PEG400/Gly | Simultaneous with Drying | 1.5 | 1.8 | 1.56 | 9.4 | 13000 | 710 | 330 | 0/5 |
| Ex. 2 | Ny6 | Sulfolane | PEG400/Gly | Simultaneous with Drying | 2.0 | 178.4 | 1.72 | 12 | 13000 | 610 | 280 | 0/5 |
| Ex. 3 | Ny6 | Sulfolane | PEG400/Gly | Simultaneous with Drying | 2.5 | 178.9 | 1.77 | 14 | 14000 | 550 | 250 | 1/5 |
| Ex. 4 | Ny6 | Sulfolane | PEG400/Gly | Simultaneous with Drying | 3.0 | 1.1 | 1.70 | 16 | 14000 | 500 | 230 | 2/5 |
| Comp. Ex. 2 | Ny6 | Sulfolane | PEG400/Gly | Before Drying | 2.0 | 173.6 | 1.32 | 4.3 | 12000 | 540 | 240 | 0/5 |
| Ex. 5 | Ny6 | Sulfolane | PEG400/Gly | After Drying | 2.0 | 2.5 | 1.72 | 19 | 14000 | 750 | 370 | 0/5 |
| In the table, Ny6 is an abbreviation of polyamide 6. | | | | | | | | | | | | |

### 3. Test Example 2

### 3-1. Production of Hollow Fiber Membranes

[Comparative Example 3]

300 g of polyamide 6 chips (A1030BRT available from UNITIKA LTD., relative viscosity: 3.53), 515 g of dimethyl sulfone (available from Tokyo Chemical Industry), and 185 g of sulfolane (available from Tokyo Chemical Industry) were stirred at 180°C for 1.5 hours to dissolve the chips, and the solution was degassed for 1 hour at a reduced stirring rate to prepare a dope solution. The dope solution was fed to a spinneret maintained at a temperature of 210°C through a metering pump, and extruded at 13.0 g/min. The spinneret had an outer diameter of 1.5 mm and an inner diameter of 0.6 mm. As an internal coagulation liquid (dense layer-forming coagulation liquid), polyethylene glycol 400 (PEG400, average molecular weight: 400) was passed at a feed rate of 5.0 g/min. The extruded dope solution was introduced through an air gap of 10 mm into a coagulation bath of a 50% by mass aqueous solution of propylene glycol (PG) (porous structure-forming coagulation liquid) at 5°C, cooled and solidified to form a polyamide hollow fiber membrane, which was taken up at a take-up rate of 20 m/min. The polyamide hollow fiber membrane taken up was immersed in water for 24 hours for solvent extraction (washing) and then dried by passing through a hot-air dryer (chamber temperature: 130°C) without stretching. Thus, a polyamide hollow fiber membrane was obtained.

[Example 6]

A polyamide hollow fiber membrane was formed by repeating the operations of Comparative Example 3 under the same conditions until the step before the solvent extraction. The polyamide hollow fiber membrane taken up was immersed in water for 24 hours for solvent extraction. Then, the polyamide hollow fiber membrane was stretched after drying, by sequentially passing through a feed roller, a hot-air dryer (chamber temperature: 130°C), a take-up roller, and a stretching roller. This operation was set such that the polyamide hollow fiber membrane was not stretched between the feed roller and the take-up roller, and the polyamide hollow fiber membrane was stretched only after the take-up roller. The stretching ratio in this operation was 2 times.

[Example 7]

A polyamide hollow fiber membrane was produced under the same conditions as in Example 6, except that polypropylene glycol 400 (PPG400, average molecular weight: 400) was used as the internal coagulation liquid (dense layer-forming coagulation liquid).

### 3-2. Evaluation Results of Physical Properties of Hollow Fiber Membranes

Table 2 shows the production conditions, the results of orientation analysis of the dense layer (orientation angle and orientation intensity), the methanol permeability, the molecular weight cut-off, and the pressure test result for each polyamide hollow fiber membrane.
Regarding the non-stretched polyamide hollow fiber membrane of Comparative Example 3, the scanning electron microscope image (1,000x magnification) confirmed the formation of a dense layer in which no pores were observed on the lumen-side surface, and the orientation analysis of the dense layer showed that the orientation angle was 12.9°, and the orientation intensity was 1.16. The polyamide hollow fiber membrane of Comparative Example 3 had a molecular weight cut-off of 920, and had a methanol permeability as low as 0.6 L/(m$^2$·bar·h).
Regarding the polyamide hollow fiber membranes of Examples 6 and 7 that were stretched after drying, the scanning electron microscope images (1,000x magnification) confirmed that the membranes maintained a dense layer in which no pores were observed on the lumen-side surface, with streak-like recessed portions being formed on the dense layer parallel to the longitudinal direction of the polyamide hollow fiber membranes, and the orientation analysis thereof showed that the orientation angle was in the range of 175.0 to 180.0°, and the orientation intensity was in the range of 1.5 to 2.0. Moreover, the polyamide hollow fiber membranes of Examples 6 and 7 had a higher methanol permeability, i.e., 2.1 to 2.9 L/(m$^2$·bar·h), while maintaining a molecular weight cut-off similar to that of the non-stretched membrane of Comparative Example 3.

[Table 2]

| | Production Conditions | | | | Orientation Analysis of Dense Layer | | Methanol Permeability (L/m²·bar·h) | Molecular Weight Cut-Off (Da) | Outer Diameter (μm) | Inner Diameter (μm) | Water Pressure Resistance (Number of Bursts) |
|---|---|---|---|---|---|---|---|---|---|---|---|
| | Resin Used | Solvent for Dope Solution | Internal Coagulation Liquid | Timing of Stretching | Stretching Ratio (Times) | Orientation Angle (°) | Orientation Intensity | | | | | |
| Comp. Ex. 3 | Ny6 | Sulfolane + Dimethyl Sulfone | PEG400 | None | - | 12.9 | 1.16 | 0.6 | 920 | 900 | 490 | 0/5 |
| Ex. 6 | Ny6 | Sulfolane + Dimethyl Sulfone | PEG400 | After Drying | 2.0 | 177.9 | 1.74 | 2.9 | 970 | 750 | 360 | 0/5 |
| Ex. 7 | Ny6 | Sulfolane + Dimethyl Sulfone | PPG400 | After Drying | 2.0 | 178.0 | 1.70 | 2.1 | 990 | 760 | 370 | 0/5 |
| In the table, Ny6 is an abbreviation of polyamide 6. | | | | | | | | | | | | |

EP 4 223 833 A1

4. Test Example 3

4-1. Production of Hollow Fiber Membranes

[Comparative Example 4]

150 g of polyamide 11 chips (Rilsan BESV0 A FDA available from Arkema, relative viscosity: 2.50) and 850 g of γ-butyrolactone (available from FUJIFILM Wako Pure Chemical Corporation) were stirred at 180°C for 1.5 hours to dissolve the chips, and the solution was degassed for 1 hour at a reduced stirring rate to prepare a dope solution. The dope solution was fed to a spinneret maintained at a temperature of 210°C through a metering pump, and extruded at 13.0 g/min. The spinneret had an outer diameter of 1.5 mm and an inner diameter of 0.6 mm. As an internal coagulation liquid (dense layer-forming coagulation liquid), a mixture of polyethylene glycol 400 (PEG400, average molecular weight: 400) and glycerin (Gly) (at a weight ratio of 90 parts by weight of PEG400 to 10 parts by weight of glycerin) was passed at a feed rate of 5.0 g/min. The extruded dope solution was introduced through an air gap of 10 mm into a coagulation bath of a 50% by mass aqueous solution of propylene glycol (PG) (porous structure-forming coagulation liquid) at 5°C, cooled and solidified to form a polyamide hollow fiber membrane, which was taken up at a take-up rate of 20 m/min. The polyamide hollow fiber membrane taken up was immersed in water for 24 hours for solvent extraction (washing) and then dried by passing through a hot-air dryer (chamber temperature: 130°C) without stretching. Thus, a polyamide hollow fiber membrane was obtained.

[Example 8]

A polyamide hollow fiber membrane was formed by repeating the operations of Comparative Example 4 under the same conditions until the step before the solvent extraction. The polyamide hollow fiber membrane taken up was immersed in water for 24 hours for solvent extraction. Then, the polyamide hollow fiber membrane was stretched after drying, by sequentially passing through a feed roller, a hot-air dryer (chamber temperature: 130°C), a take-up roller, and a stretching roller. This operation was set such that the polyamide hollow fiber membrane was not stretched between the feed roller and the take-up roller, and the polyamide hollow fiber membrane was stretched only after the take-up roller. The stretching ratio in this operation was 2 times.

4-2. Evaluation Results of Physical Properties of Hollow Fiber Membranes

Table 3 shows the production conditions, the results of orientation analysis of the dense layer (orientation angle and orientation intensity), the methanol permeability, the molecular weight cut-off, and the pressure test result for each polyamide hollow fiber membrane.
Regarding the non-stretched polyamide hollow fiber membrane of Comparative Example 4, the scanning electron microscope image (1,000x magnification) confirmed the formation of a dense layer in which no pores were observed on the lumen-side surface, and the orientation analysis of the dense layer showed that the orientation angle was 165.0°, and the orientation intensity was 1.08. The polyamide hollow fiber membrane of Comparative Example 4 had a molecular weight cut-off of 860, and had a methanol permeability as low as 0.2 L/(m$^2$·bar·h).
Regarding the polyamide hollow fiber membrane of Example 8 that was stretched after drying, the scanning electron microscope image (1,000x magnification) confirmed that the membrane maintained a dense layer in which no pores were observed on the lumen-side surface, with streak-like recessed portions being formed on the dense layer parallel to the longitudinal direction of the polyamide hollow fiber membrane, and the orientation analysis thereof showed that the orientation angle was in the range of 0 to 5.0°, and the orientation intensity was in the range of 1.5 to 2.0. Moreover, the polyamide hollow fiber membrane of Example 8 had a methanol permeability as high as four times the methanol permeability of the membrane of Comparative Example 4, while maintaining a molecular weight cut-off similar to that of the non-stretched membrane of Comparative Example 4.

[Table 3]

| | | Production Conditions | | | | Orientation Analysis of Dense Layer | | Methanol Permeability (L/m²·bar·h) | Molecular Weight Cut-Off (Da) | Outer Diameter (μm) | Inner Diameter (μm) | Water Pressure Resistance (Number of Bursts) |
|---|---|---|---|---|---|---|---|---|---|---|---|---|
| | Resin Used | Solvent for Dope Solution | Internal Coagulation Liquid | Timing of Stretching | Stretching Ratio (Times) | Orientation Angle (°) | Orientation Intensity | | | | | |
| Comp. Ex. 4 | Ny11 | γ-butyrolactone | PEG400/Gly | None | - | 165.0 | 1.08 | 0.2 | 860 | 890 | 500 | 0/5 |
| Ex. 8 | Ny11 | γ-butyrolactone | PEG400/Gly | After Drying | 2.0 | 2.1 | 1.66 | 0.8 | 920 | 760 | 370 | 0/5 |
| In the table, Ny11 is an abbreviation of polyamide 11. | | | | | | | | | | | | |

Reference Signs List

1: module
1a: hollow fiber membranes
1b: tube filled with cured epoxy resin
2: feed pump
3: pressure gauge
4: pressure relief valve
5: receiving tray
6: methanol permeated out of hollow fiber membranes

**Claims**

1. A polyamide porous membrane comprising a dense layer formed on at least one surface,

   wherein the polyamide porous membrane has a streak-like recessed portion extending in one direction of a surface of the dense layer, and
   the streak-like recessed portion has an orientation angle of 0 to 5.0° or 175.0 to 180.0° and an orientation intensity of 1.5 to 2.0 according to the following orientation analysis:

   [Orientation Analysis]
   An electron microscope image of the surface of the dense layer is placed such that an X-axis direction is parallel to a longitudinal direction of the streak-like recessed portion observed in the dense layer, and the electron microscope image is binarized to obtain a binarized image. From a power spectrum image obtained by Fourier transformation of the binarized image, an approximate ellipse of an angular distribution map of mean amplitudes is determined. Based on the approximate ellipse, an orientation angle and an orientation intensity are determined as follows:

   orientation angle: angle (°) of a minor-axis direction of the approximate ellipse with respect to a positive direction of the X-axis
   orientation intensity: ratio of major-axis length/minor-axis length in the approximate ellipse.

2. The polyamide porous membrane according to claim 1, which has a molecular weight cut-off of 200 to 50,000.

3. The polyamide porous membrane according to claim 1 or 2, wherein a polyamide resin constituting the polyamide porous membrane is an aliphatic polyamide resin having methylene and amide groups at a molar ratio of $-CH_2-$ : $-NHCO- = 4:1$ to $10:1$.

4. The polyamide porous membrane according to any one of claims 1 to 3, which is a hollow fiber membrane.

5. A filtration method comprising subjecting a fluid to be treated containing a solute or particles to filtration treatment, using the polyamide porous membrane according to any one of claims 1 to 4.

6. A filtration membrane module comprising the polyamide porous membrane according to any one of claims 1 to 4, the polyamide porous membrane being housed in a module casing.

7. A method for producing a polyamide porous membrane comprising the following first to fourth steps:

   the first step of preparing a dope solution by dissolving a polyamide resin in an organic solvent at a temperature of 100°C or more, the organic solvent having a boiling point of 150°C or more and incompatible with the polyamide resin at a temperature of less than 100°C;
   the second step of extruding the dope solution prepared in the first step in a predetermined shape into a coagulation bath at 100°C or less to solidify the polyamide resin into a membrane, wherein at least one surface of the dope solution extruded in the predetermined shape is contacted with a coagulation liquid having compatibility with the organic solvent used in the dope solution and having low affinity for the polyamide resin to form a polyamide porous membrane;

the third step of extracting and removing the coagulation liquid undergoing phase separation in the polyamide porous membrane formed in the second step; and

the fourth step of uniaxially stretching the polyamide porous membrane after the third step simultaneously with or after drying.

8. The method for producing a polyamide porous membrane according to claim 7, wherein in the fourth step, the polyamide porous membrane is uniaxially stretched at a stretching ratio of 1.2 to 5 times.

9. The method for producing a polyamide porous membrane according to claim 7 or 8, wherein in the first step, the organic solvent used for preparing the dope solution is an aprotic polar solvent.

10. The method for producing a polyamide porous membrane according to any one of claims 7 to 9, which is a method for producing the polyamide porous membrane in the form of a hollow fiber membrane,

wherein the second step is the step of using a double-tube nozzle for hollow fiber production with a double-tube structure to discharge the dope solution from an outer annular nozzle while simultaneously discharging an internal coagulation liquid from an inner nozzle to immerse the dope solution and the internal coagulation liquid in a coagulation bath, and

a coagulation liquid having compatibility with the organic solvent used in the dope solution and having low affinity for the polyamide resin is used as at least one of the internal coagulation liquid and the coagulation bath.

FIG. 1

a

b

c

FIG. 2

a

b

FIG. 3

| Comp. Ex. 1 Non-Stretched | Ex. 1 Stretching Ratio of 1.5 Times | Ex. 2 Stretching Ratio of 2 Times | Ex. 3 Stretching Ratio of 2.5 Times | Ex. 4 Stretching Ratio of 3 Times |

FIG. 4

| Comp. Ex. 1 Non-Stretched | Ex. 1 Stretching Ratio of 1.5 Times | Ex. 2 Stretching Ratio of 2 Times | Ex. 3 Stretching Ratio of 2.5 Times | Ex. 4 Stretching Ratio of 3 Times |

## INTERNATIONAL SEARCH REPORT

International application No.

**PCT/JP2021/035113**

**A. CLASSIFICATION OF SUBJECT MATTER**

***C08J 9/28***(2006.01)i; ***B01D 63/02***(2006.01)i; ***B01D 69/00***(2006.01)i; ***B01D 69/02***(2006.01)i; ***B01D 69/08***(2006.01)i; ***B01D 69/10***(2006.01)i; ***B01D 69/12***(2006.01)i; ***B01D 71/56***(2006.01)i; ***C08G 69/02***(2006.01)i; ***D01F 6/60***(2006.01)i
FI: C08J9/28 101; B01D63/02; B01D69/00; B01D69/02; B01D69/08; B01D69/10; B01D69/12; B01D71/56; C08G69/02; C08J9/28 CFG; D01F6/60 321A

According to International Patent Classification (IPC) or to both national classification and IPC

**B. FIELDS SEARCHED**

Minimum documentation searched (classification system followed by classification symbols)

C08J9/28; B01D63/02; B01D69/00; B01D69/02; B01D69/08; B01D69/10; B01D69/12; B01D71/56; C08G69/02; D01F6/60

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2014-036946 A (UNITIKA LTD.) 27 February 2014 (2014-02-27)<br>entire text, particularly, claims, paragraphs [0001]-[0014], [0019]-[0036], [0076]-[0088], fig. 1-5 | 1-10 |
| Y | JP 63-100916 A (SUMITOMO ELECTRIC INDUSTRIES, LTD.) 06 May 1988 (1988-05-06)<br>entire text, particularly, claims, page 2, upper left column to page 5, lower left column | 1-10 |
| A | JP 2-026917 A (TOYO ROSHI KAISHA, LTD.) 29 January 1990 (1990-01-29)<br>entire text | 1-10 |
| A | JP 2015-198999 A (TORAY INDUSTRIES, INC.) 12 November 2015 (2015-11-12)<br>entire text | 1-10 |
| A | JP 2010-240535 A (UNITIKA LTD.) 28 October 2010 (2010-10-28)<br>entire text | 1-10 |
| A | WO 2009/054495 A1 (TOYO BOSEKI KABUSHIKI KAISHA) 30 April 2009 (2009-04-30)<br>entire text | 1-10 |

☑ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 November 2021** | **16 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2021/035113**

**C.    DOCUMENTS CONSIDERED TO BE RELEVANT**

| Category* | Citation of document, with indication, where appropriate, of the relevant passages | Relevant to claim No. |
|---|---|---|
| A | JP 2005-193193 A (KURARAY CO., LTD.) 21 July 2005 (2005-07-21)<br>entire text | 1-10 |
| A | JP 2002-030176 A (TEIJIN LTD.) 31 January 2002 (2002-01-31)<br>entire text | 1-10 |

Form PCT/ISA/210 (second sheet) (January 2015)

## INTERNATIONAL SEARCH REPORT
### Information on patent family members

| International application No. |
|---|
| **PCT/JP2021/035113** |

| Patent document cited in search report | | | Publication date (day/month/year) | Patent family member(s) | Publication date (day/month/year) |
|---|---|---|---|---|---|
| JP | 2014-036946 | A | 27 February 2014 | (Family: none) | |
| JP | 63-100916 | A | 06 May 1988 | (Family: none) | |
| JP | 2-026917 | A | 29 January 1990 | (Family: none) | |
| JP | 2015-198999 | A | 12 November 2015 | (Family: none) | |
| JP | 2010-240535 | A | 28 October 2010 | (Family: none) | |
| WO | 2009/054495 | A1 | 30 April 2009 | JP 4556150 B2 | |
| JP | 2005-193193 | A | 21 July 2005 | (Family: none) | |
| JP | 2002-030176 | A | 31 January 2002 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP SHO5865009 A

**Non-patent literature cited in the description**

• **TOSHIHARU ENOMAE et al.** Method of Determining Fiber Orientation of Paper by Fourier Image Analysis. *Summary of 26th Annual Meeting of the Japan Society for the Conservation of Cultural Property,* 2004, 44-45